# EUROPÄISCHE PATENTSCHRIFT

(11) **EP 0 951 700 B1**
(45) Veröffentlichungstag und Bekanntmachung des Hinweises auf die Patenterteilung: **26.11.2003**
(21) Anmeldenummer: 98905232.9
(22) Anmeldetag: 07.01.1998
(51) Int. Cl.: G06T 15/10

(54) **VERFAHREN ZUR STEREOSKOPISCHEN DARSTELLUNG**
METHOD FOR STEREOSCOPIC REPRESENTATION
PROCEDE DE REPRESENTATION STEREOSCOPIQUE

(30) Priorität: 10.01.1997 DE 19700547
(43) Veröffentlichungstag der Anmeldung: 27.10.1999
(73) Patentinhaber: Diehl Avionik Systeme GmbH, 88641 Überlingen (DE)
(72) Erfinder: HAMMER, Matthias, D-64367 Mühltal (DE)
(74) Vertreter: Gornott, Dietmar, Dipl.-Ing.
(86) Internationale Anmeldenummer: DE9800067
(87) Internationale Veröffentlichungsnummer: WO98030981

(56) Entgegenhaltungen:
- EP-A- 0 389 090
- EP-A- 0 817 123
- US-A- 4 368 185
- US-A- 5 289 185

## Beschreibung

Die Erfindung betrifft ein Verfahren zur graphischen Darstellung von an sich als zweidimensionale Darstellung vorliegenden Zusatzinformationen zusätzlich zu einem stereoskopisch dargestellten Raum.

Mit zunehmenden Fortschritten bei der Darstellung von Informationen mit Hilfe von Computern und geeigneten Bildwiedergabeeinrichtungen gewinnt auch die stereoskopische Darstellung von Räumen bzw. von in einem Raum vorhandenen Objekten an Bedeutung. Häufig sind weitere Informationen - im folgenden Zusatzinformationen - im Gesichtsfeld eines Betrachters darzustellen, wobei zweckmäßigerweise die gleiche Bildwiedergabeeinrichtung verwendet werden kann.

So ist beispielsweise durch EP 0 418 558 A2 bzw. US 5,420,582 und US 5,289,185 ein Verfahren und eine Einrichtung zur Darstellung von Flugführungsinformation mit einer räumlichen Darstellung des Flugraums mit mindestens einem Horizont und der vorausberechneten Flugbahn des Flugzeugs bekanntgeworden. Die Darstellung des Flugraums kann verschiedene Objekte wie das Gelände, Start- und Landebahn oder Gebäude enthalten und perspektivisch auf einem flachen Bildschirm oder stereoskopisch wiedergegeben werden. Um auch andere Anzeigen mit einem Blick erfassen zu können, ist bei der bekannten Einrichtung die Darstellung verschiedener Skalen auf dem Bildschirm als Zusatzinformation vorgesehen. Diese ist zwar an sich nur zweidimensional, kann aber bei einer stereoskopischen Darstellung des Flugraumes den Betrachter irritieren - insbesondere durch zusätzliche Vergenzbewegungen der Augen, wenn die Aufmerksamkeit des Betrachters zwischen den Zusatzinformationen und Objekten der stereoskopischen Darstellung wechselt.

Aus EP 0 817 123 A1 ist es zwar bekannt, zweidimensionale Objekte mit einer Parallaxe zu versehen und somit stereoskopisch darzustellen; es wird jedoch dabei eine gegebene dreidimensionale Welt in ein Volumen umgesetzt, wobei die stereoskopischen Display-Bedingungen in Übereinstimmung mit Änderungen der dargestellten Szene sind. Dabei wird die Darstellung derart gewählt, daß sie bezüglich eines Gazepoints (Aufmerksamkeitspunkt) dem Benutzer am angenehmsten erscheint. Zur Darstellung von Flugführungsinformationen mit einer räumlichen Darstellung des Flugraums ist dieses bekannte Verfahren deshalb nicht geeignet.

Aufgabe der vorliegenden Erfindung ist es, bei einer stereoskopischen Darstellung eines Raumes einschließlich an sich zweidimensionaler Zusatzinformationen eine Rezeption aller Informationen zu erleichtern und ein ermüdungsfreies Arbeiten mit derartigen Darstellungen zu ermöglichen.

Diese Aufgabe wird mit dem erf indungsgemäßen Verfahren gelöst, wobei der stereoskopisch dargestellte Raum in Blickrichtung vor einem Fahrzeug, insbesondere einem Flugzeug, liegt und stereoskopisch dargestellte Objekte enthält, welche Führungsinformationen darstellen und wobei die Zusatzinformationen mit einer Parallaxe versehen und derart für das linke und rechte Auge versetzt dargestellt werden, daß sie in einer Tiefe des dargestellten Raumes abgebildet werden, welche in einer vorgegebenen Beziehung zu der Tiefe von im dargestellten Raum vorhandenen Objekten steht.

Vorzugsweise ist bei der Erfindung vorgesehen, daß die Zusatzinformationen in einer Tiefe dargestellt sind, die in einem logischen Zusammenhang mit den Objekten steht.

Bei der Erfindung ist nicht ausgeschlossen, daß den Darstellungen der Zusatzinformation (Skalen, Zeiger, Warnhinweise) räumliche Attribute beigegeben werden, wie beispielsweise eine bestimmte Dicke oder Schattierungen. Die Zusatzinformationen können sich auch in mehreren Ebenen befinden.

Als Bildwiedergabeeinrichtungen sind alle bekannten zukünftigen Einrichtungen zur stereoskopischen Wiedergabe geeignet, beispielsweise am Kopf des Betrachters angeordnete über jeweils ein Okular zu betrachtende Miniatur-Bildschirme, Systeme mit umlaufenden Blenden, bei denen jeweils abwechselnd das linke und rechte Auge einen Bildschirm betrachtet, oder Systeme mit Polarisationsbrillen.

Wird beispielsweise der Raum einschließlich der darin vorhandenen Objekte von einem Graphik-Computer berechnet, so sind letztlich auch Informationen vorhanden über die Bedeutung oder den Aufmerksamkeitswert der in dem Raum vorhandenen Objekte. So kann beispielsweise bei einem simulierten Blick aus einem Fahrzeug zur Anpassung an natürliche Lichtverhältnisse eine Skala in der Ebene der Windschutzscheibe des Fahrzeugs dargestellt sein. Erfordert jedoch aufgrund der Fahrsituation eine Darstellung eines Objektes besondere Aufmerksamkeit, beispielsweise einer Landebahn, so kann es durchaus zweckmäßig sein, die Skala einschließlich des zugehörigen Zeigers in der Tiefe der Landebahn abzubilden.

Bei dieser Weiterbildung hat es sich als besonders vorteilhaft herausgestellt, daß die Objekte einen Prädiktor darstellen, der die voraussichtliche Bahn des Fahrzeugs bezeichnet, und daß die Tiefe der Zusatzinformationen im Bereich des Prädiktors liegt. Vorzugsweise ist dabei vorgesehen, daß der Prädiktor aus mehreren hintereinanderliegenden Teilen besteht und daß die Tiefe der Zusatzinformationen im Bereich eines ersten, dem Fahrzeug nächstliegenden Teils liegt.

Bei dem erfindungsgemäßen Verfahren ist jedoch nicht ausgeschlossen, daß je nach vorliegenden Voraussetzungen die Zusatzinformationen etwas vor oder hinter dem jeweiligen Objekt dargestellt werden.

Eine andere Weiterbildung des erfindungsgemäßen Verfahrens besteht darin, daß die Tiefe der Zusatzinformationen veränderlich ist und an die Tiefe von vorgegebenen Objekten im Raum angepaßt wird. Hierbei kann insbesondere bei einem Blick aus Fahrzeugen in Fahrtrichtung die Zusatzinformation zusammen mit raumfesten Objekten dem Fahrzeug und damit dem Betrachter näherkommen. Dabei kann außerdem vorgesehen sein, daß von mehreren Objekten im Raum ein oder mehrere als vorgegebene Objekte auswählbar sind. Das Auswählen erfolgt anhand von ebenfalls in einem Computer gespeicherten Informationen. So kann beispielsweise eine zusammen mit einer Wegmarke näherkommende Anzeige bezüglich der Tiefe auf eine folgende Wegmarke springen, wenn die erste Wegmarke aus dem Blickfeld gerät.

Eine vorteilhafte Ausgestaltung des erfindungsgemäßen Verfahrens besteht darin, daß besonders wichtige Zusatzinformationen dadurch hervorgehoben werden, daß sie vor dem Bildschirm einer stereoskopischen Bildwiedergabeeinrichtung dargestellt werden, das heißt zwischen Bildschirm und Betrachter. Es kann ferner vorgesehen sein, daß besonders wichtige Zusatzinformationen dadurch hervorgehoben werden, daß sie mit sich verändernder Tiefe, vorzugsweise mit abnehmender Tiefe (dem Betrachter entgegenkommend) dargestellt werden.

Damit können beispielsweise Warnsignale besonders deutlich gegenüber den weiteren dargestellten Informationen hervorgehoben werden, gegebenenfalls derart, daß sie sich aus der Tiefe des Bildes hervorbewegen und dem Betrachter geradezu "ins Auge springen".

Mit einer anderen Weiterbildung des erfindungsgemäßen Verfahrens wird zusätzlich die Aufgabe gelöst, auch hinter dem Betrachter liegende Objekte stereoskopisch darzustellen. Solche Objekte können beispielsweise sich von hinten nähernde Flugzeuge sein. Diese Weiterbildung besteht darin, daß zur Darstellung von zusätzlichen Objekten, die sich hinter dem Betrachter befinden, die zusätzlichen Objekte mit einer Parallaxe versehen und derart für das linke und rechte Auge versetzt dargestellt werden, daß sie als zwischen dem Betrachter und dem Bildschirm befindlich erscheinen.

Bei dieser Ausführungsform ist vorzugsweise vorgesehen, daß ein die zusätzlichen Objekte umfassendes Sichtvolumen, das von einem hinter dem Betrachter liegenden Blickpunkt ausgehend bis zur Ebene des Bildschirms reicht, auf ein Sichtvolumen zwischen dem Betrachter und der Ebene des Bildschirms verkleinert wird.

Eine bessere Tiefenauflösung von insbesondere weit entfernten Objekten kann gemäß einer anderen Weiterbildung dadurch erzielt werden, daß die Tiefe des Raumes gegenüber der Realität dadurch aufgeweitet dargestellt wird, daß ein Versatz der Bilder für das linke und das rechte Auge mindestens in einem Teil der Tiefe gegenüber einer maßstäblichen Abbildung vergrößert ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Schirmbild zur Erläuterung der Erfindung,
- Fig. 2: eine schematische Darstellung zur Erläuterung der Information des Schirmbildes,
- Fig. 3: ein Blockschaltbild einer Einrichtung zur Durchführung des erfindungsgemäßen Verfahrens und
- Fig. 4: eine schematische Darstellung einer weiteren Ausführungsform der Erfindung.

Gleiche Teile sind in den Figuren mit gleichen Bezugszeichen versehen.

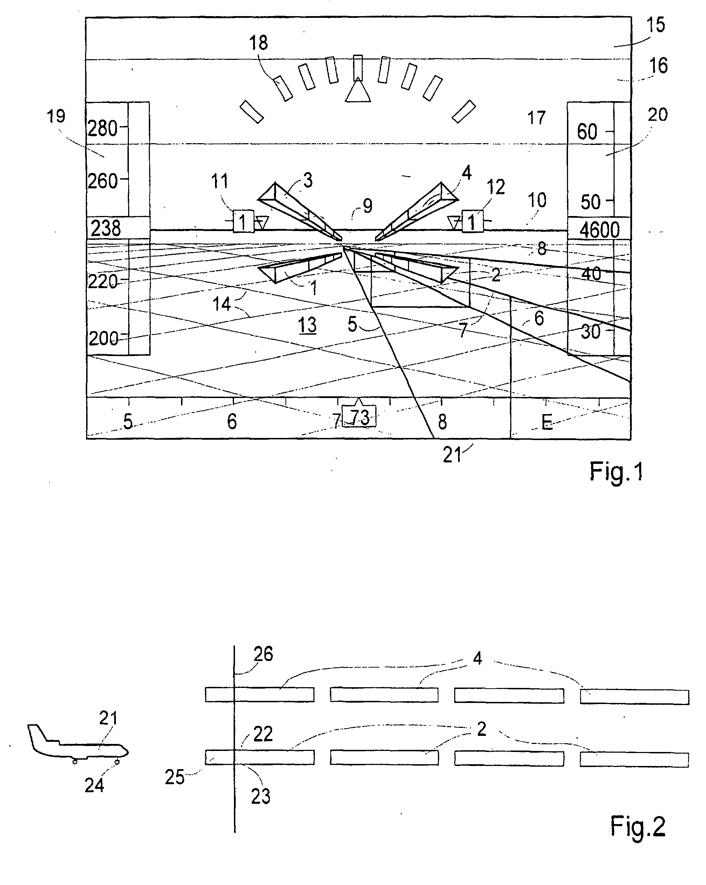

Die auf dem Schirmbild gemäß Fig. 1 dargestellte Flugsituation entspricht einem Landeanflug, wobei die vorausberechnete Flugbahn mit Hilfe eines aus vier Körpern 1, 2, 3, 4 bestehenden Prädiktors und Geraden 5, 6, 7, 8 als Grenzen eines Anflugkanals, welchem sich das Flugzeug nähert, dargestellt sind. Bei weiterem Geradeausflug würde das Flugzeug neben der lediglich als Rechteck 9 dargestellten Landebahn aufsetzen.

Eine Linie 10 stellt den Horizont dar, wobei Rechtecke 11, 12 mit ihrem Abstand zum Horizont 10 und mit den innerhalb der Rechtecke sichtbaren Ziffern den Nickwinkel anzeigen. Das Gelände 13 ist mit einem Gitter 14 versehen, das in Nord-Süd-Richtung ausgerichtet ist. Der Himmel ist in Form von Streifen 15, 16, 17 mit verschiedenem Farbton (in Fig. 1 nicht sichtbar, dunkleres und helleres Blau) dargestellt, um eine weitere Information über den Nickwinkel zu erhalten. Das Gelände 13 ist vorzugsweise grün oder braun dargestellt. Für die Körper 1 bis 4, die im folgenden auch Prädiktor genannt werden, sind Farben und Helligkeitswerte vorgesehen, die sich sowohl vom Himmel als auch vom Gelände abheben.

Die weiteren auf dem Schirmbild gemäß Fig. 1 sichtbaren Anzeigen, insbesondere eine Rollwinkelanzeige 18, eine Geschwindigkeitsanzeige 19, eine Höhenanzeige 20 und eine Kursanzeige 21, sind an sich bekannt und brauchen im einzelnen zum Verständnis der Erfindung nicht näher erläutert zu werden.

Der in Fig. 1 dargestellte Prädiktor weist in mehrere Teilkörper aufgeteilte Körper 1 bis 4 auf. Eine Unterteilung mit einzelnen Linien, wie sie bei der Darstellung in Fig. 1 vorgenommen wurde, ist jedoch wegen der Auflösungsgrenzen der Bildwiedergabeanordnung und des menschlichen Auges bei dem gegebenen Betrachtungsabstand nicht deutlich sichtbar, insbesondere bei den am weitesten entfernten Teilkörpern. Deshalb ist in der Praxis die Aufteilung in Teilkörper durch ihre Formgebung oder durch einen Farbverlauf vorgesehen.

Bei der in Fig. 2 dargestellten Seitenansicht eines Flugzeugs 21 und der in die Realität transformierten Körper 2, 4 ist die Höhe des Körpers 2 und des in Fig. 2 nicht sichtbaren Körpers auf der linken Seite der Flugbahn derart gewählt, daß die obere Kante 22 etwa in Augenhöhe des Piloten liegt, während die untere Kante 23 die Höhe der Aufstandsfläche des Rades 24 einnimmt. Eine Linie 26 kennzeichnet die Tiefe im Sinne von Abstand zum Betrachter der Anzeigen 18 bis 21.

Das Schirmbild nach Fig. 1 zeigt eine perspektivische Darstellung, die Erfindung geht jedoch von einer stereoskopischen Darstellung aus. Die Wiedergabe einer solchen Darstellung - die ja bei der für Patentanmeldungen erforderlichen Papierform ohnehin nur als zweidimensionale Darstellung möglich wäre - zeichnet sich im wesentlichen dadurch aus, daß zwei Teilbilder erzeugt werden, die sich in der Bildschirmebene nicht und mit zunehmend größerer Entfernung vom Betrachter (Tiefe) durch eine größere Parallaxe unterscheiden. Werden beispielsweise die Anzeigen 18 bis 21 bei jedem der Teilbilder an der gleichen Stelle dargestellt, so erscheinen sie dem Betrachter unendlich weit entfernt, beispielsweise am Horizont.

Für die Belange der Flugführung mit Hilfe des Prädiktors 1 bis 4 hat es sich jedoch als günstig herausgestellt, die Anzeigen im Bereich der Tiefe des jeweils nächstliegenden Teils 25 des Prädiktors anzuordnen. Die Parallaxe, das heißt der horizontale Versatz von einem Teilbild zum anderen, der Anzeigen wird daher entsprechend der Parallaxe innerhalb des Tiefenbereiches der dem Betrachter zugewandten Teile 25 des Prädiktors gewählt.

Zusätzlich zu einer der Tiefe entsprechenden Wahl der Parallaxe ist eine Verdeckung von hintereinander angeordneten Objekten entsprechend ihrer Tiefe erforderlich. So wird beispielsweise bei dem Schirmbild nach Fig. 1 vorausgesetzt, daß sich der Anflugkanal 5 bis 8 von der Landebahn 9 bis hinter den Betrachter fortsetzt. Die im Vordergrund des Bildes befindlichen Teile des Anflugkanals befinden sich dementsprechend näher an dem Betrachter als die Teile 25 des Prädiktors und damit auch näher als die Anzeigen 18 bis 21. Diese sind jedoch näher am Betrachter als der Horizont, so daß sie zwar den Horizont verdecken; jedoch wiederum von den Linien des Anflugkanals verdeckt werden.

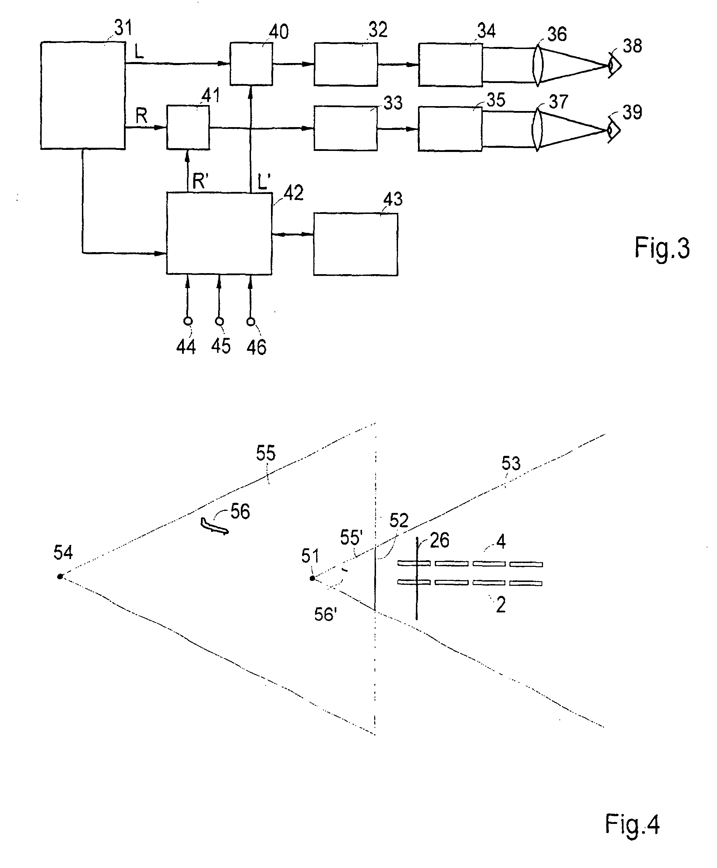

Das Ausführungsbeispiel nach Fig. 3 ist zwar als Blockschaltbild dargestellt. Dieses bedeutet jedoch nicht, daß die dargestellte Einrichtung auf eine Realisierung mit Hilfe von einzelnen den Blöcken entsprechenden Schaltungen beschränkt ist. Die Einrichtung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in dem Blockschaltbild dargestellten Verarbeitungsschritte durchführen.

Bei dem Ausführungsbeispiel einer Einrichtung zur Durchführung des erfindungsgemäßen Verfahrens gemäß Fig. 3 ist für die Darstellung des Flugraumes und der darin befindlichen Objekte einschließlich des Prädiktors 1 bis 4 und des Anflugkanals 5 bis 8 (Fig. 1) ein Graphikprozessor 31 vorgesehen, der jeweils ein linkes und ein rechtes Teilbild erzeugt, die in je einem Speicher 32, 33 abgelegt und einer Bildwiedergabeeinrichtung 34, 35 zugeführt werden. Jeweils eine Bildwiedergabeeinrichtung 34, 35 kann über ein Okular 36, 37 vom linken Auge 38 bzw. rechten Auge 39 eines Betrachters betrachtet werden.

In Einrichtungen 40, 41 werden die vom Graphikprozessor 31 erzeugten Signale L, R mit Signalen L', R' kombiniert, die von einem weiteren Graphikprozessor 42 erzeugt werden. Dieser dient zur Erzeugung der Anzeigen 18 bis 21. Die dazu erforderlichen Elemente werden einem Speicher 43 entnommen, während die anzuzeigenden Größen (Flughöhe, Fluggeschwindigkeit, Lage usw.) von Sensoren 44 bis 46 zugeführt werden. Der weitere Graphikprozessor 42 erhält vom Graphikprozessor 31 Informationen über die Tiefe der darzustellenden Anzeigen - bei dem Schirmbild nach Fig. 1 also über die Tiefe der Teile 25 des Prädiktors. Wird beispielsweise in einer anderen Flugsituation eine die Landebahn 9 betreffende Anzeige vom Graphikprozessor 42 erzeugt, wird vom Graphikprozessor 31 die Tiefe der Landebahn 9 dem weiteren Graphikprozessor 42 übermittelt. Entsprechend diesen Angaben wird diese Anzeige dann neben bzw. über der Landebahn dargestellt.

Das in Fig. 4 schematisch dargestellte Ausführungsbeispiel des erfindungsgemäßen Verfahrens ermöglicht eine Sichtbarmachung von Objekten, beispielsweise von Flugzeugen, die sich außerhalb des Sichtvolumens 53 eines Betrachters 51, insbesondere hinter dem Betrachter, befinden. Das Sichtvolumen 53 ergibt sich aus dem Betrachtungsabstand des Betrachters 51 vom Bildschirm 52 und der Bildschirmgröße und der Skalierung des dargestellten Raumes. Innerhalb des Sichtvolumens befindet sich im Falle des Ausführungsbeispiels nach den Figuren 1 und 2 unter anderem die Darstellung des Prädiktors 2, 4 und der Anzeigen 26.

Von einem zurückliegenden gedachten Betrachter 54 kann ein Sichtvolumen 55 erfaßt werden, in dem sich ein Flugzeug 56 befindet. Durch an sich bekannte Maßnahmen, wie Radarüberwachung, Kommunikationssysteme zwischen den Flugzeugen untereinander sowie zwischen den Flugzeugen und Bodenstationen, werden dem Flugzeug, in dem sich der Betrachter 51 befindet, die Position und die Lage des Flugzeugs 56 übertragen. Das Sichtvolumen 55 wird einschließlich des Flugzeugs 56 in ein verkleinertes Sichtvolumen 55' zwischen dem Betrachter 51 und dem Bildschirm 52 projiziert. Dabei tritt an die Stelle des Flugzeugs 56 ein Flugzeugsymbol 56', das die Position innerhalb des Sichtvolumens 55 und die Lage wiedergibt.

## Patentansprüche

1. Verfahren zur graphischen Darstellung von an sich als zweidimensionale Darstellung vorliegenden Zusatzinformationen zusätzlich zu einem stereoskopisch dargestellten Raum, wobei der stereoskopisch dargestellte Raum in Blickrichtung vor einem Fahrzeug, insbesondere einem Flugzeug, liegt und stereoskopisch dargestellte Objekte enthält, welche Führungsinformationen darstellen und wobei die Zusatzinformationen mit einer Parallaxe versehen und derart für das linke und rechte Auge versetzt dargestellt werden, daß sie in einer Tiefe des dargestellten Raumes abgebildet werden, welche in einer vorgegebenen Beziehung zu der Tiefe von im dargestellten Raum vorhandenen Objekten steht.

2. Verfahren nach Anspruch 1, **dadurch gekennzeichnet, daß** die Zusatzinformationen in einer Tiefe dargestellt sind, die in einem logischen Zusammenhang mit den Objekten steht.

3. Verfahren nach Anspruch 2, **dadurch gekennzeichnet, daß** die Objekte einen Prädiktor darstellen, der die voraussichtliche Bahn des Fahrzeugs bezeichnet, und daß die Tiefe der Zusatzinformationen im Bereich des Prädiktors liegt.

4. Verfahren nach Anspruch 3, **dadurch gekennzeichnet, daß** der Prädiktor aus mehreren hintereinanderliegenden Teilen besteht und daß die Tiefe der Zusatzinformationen im Bereich eines ersten, dem Fahrzeug nächstliegenden Teils liegt.

5. Verfahren nach Anspruch 1, **dadurch gekennzeichnet, daß** die Tiefe der Zusatzinformationen veränderlich ist und an die Tiefe von vorgegebenen Objekten im Raum angepaßt wird.

6. Verfahren nach Anspruch 5, **dadurch gekennzeichnet, daß** von mehreren Objekten im Raum ein oder mehrere als vorgegebene Objekte auswählbar sind.

7. Verfahren nach einem der vorhergehenden Ansprüche, **dadurch gekennzeichnet, daß** besonders wichtige Zusatzinformationen dadurch hervorgehoben werden, daß sie vor dem Bildschirm einer stereoskopischen Bildwiedergabeeinrichtung dargestellt werden.

8. Verfahren nach einem der vorhergehenden Ansprüche, **dadurch gekennzeichnet, daß** besonders wichtige Zusatzinformationen dadurch hervorgehoben werden, daß sie mit sich verändernder Tiefe, vorzugsweise mit abnehmender Tiefe (dem Betrachter entgegenkommend) dargestellt werden.

9. Verfahren nach einem der vorhergehenden Ansprüche, **dadurch gekennzeichnet, daß** zur Darstellung von zusätzlichen Objekten, die sich hinter dem Betrachter befinden, die zusätzlichen Objekte mit einer Parallaxe versehen und derart für das linke und rechte Auge versetzt dargestellt werden, daß sie als zwischen dem Betrachter und dem Bildschirm befindlich erscheinen.

10. Verfahren nach Anspruch 9, **dadurch gekennzeichnet, daß** ein die zusätzlichen Objekte umfassendes Sichtvolumen, das von einem hinter dem Betrachter liegenden Blickpunkt ausgehend bis zur Ebene des Bildschirms reicht, auf ein Sichtvolumen zwischen dem Betrachter und der Ebene des Bildschirms verkleinert wird.

11. Verfahren nach einem der vorhergehenden Ansprüche, **dadurch gekennzeichnet, daß** die Tiefe des Raumes gegenüber der Realität dadurch aufgeweitet dargestellt wird, daß ein Versatz der Bilder für das linke und das rechte Auge mindestens in einem Teil der Tiefe gegenüber einer maßstäblichen Abbildung vergrößert ist.

## Claims

1. Method for graphical representation of additional information which itself is present as a two-dimensional representation in addition to a stereoscopically represented space, whereby the stereoscopically represented space lies in the viewing direction in front of a vehicle, in particular an aircraft and contains stereoscopically represented objects that represent guidance information and whereby the additional information is provided with parallax and represented offset for the left and right eyes such that it is depicted in a depth of the space represented which bears a predetermined relation to the depth of objects present in the space represented.

2. Method according to Claim 1, **characterised in that** the additional information is represented in a depth which stands in a logical relation to the objects.

3. Method according to Claim 2, **characterised in that** the objects represent a predictor which denotes the likely path of the vehicle and that the depth of the additional information lies in the region of the predictor.

4. Method according to Claim 3, **characterised in that** the predictor comprises a plurality of parts lying one behind the other and that the depth of the additional information lies in the region of a first part adjacent to the vehicle.

5. Method according to Claim 1, **characterised in that** the depth of the additional information is changeable and is adapted to the depth of predetermined objects in the space.

6. Method according to Claim 5, **characterised in that** of a plurality of objects in the space, one or more may be selected as predetermined objects.

7. Method according to one of the previous claims, **characterised in that** particularly important additional information is thereby emphasised **in that** it is represented in front of the screen of a stereoscopic image reproduction apparatus.

8. Method according to one of the previous claims, **characterised in that** particularly important additional information is thereby emphasised **in that** it is represented with changing depth, preferably with decreasing depth (approaching the observer).

9. Method according to one of the previous claims, **characterised in that** for representing additional objects situated behind the observer, the additional objects are provided with a parallax and represented offset for the left and right eyes such that they appear as situated between the observer and the screen.

10. Method according to Claim 9, **characterised in that** a visual volume encompassing the additional objects which reaches from a viewpoint behind the observer to the plane of the screen is reduced to a visual volume between the observer and the plane of the screen.

11. Method according to one of the previous claims, **characterised in that** the depth of the space may be represented enlarged in relation to reality **in that** an offset of the images for the left and right eyes is enlarged at least in part of the depth in relation to a scale depiction.

## Revendications

1. Procédé pour représenter graphiquement des informations supplémentaires disponibles, en soi, dans une représentation à deux dimensions, en supplément à un espace représenté dans un mode stéréoscopique, moyennant quoi l'espace représenté dans un mode stéréoscopique se situe dans la direction de visée devant un véhicule, en particulier devant un avion, et contient des objets représentés dans un mode stéréoscopique, lesquels représentent des informations de guidage et moyennant quoi les informations supplémentaires sont dotées d'un parallaxe et sont représentées de façon décalée pour l'oeil gauche et pour l'oeil droit de telle sorte qu'elles soient projetées dans une profondeur de l'espace représenté, laquelle est définie selon une relation par défaut par rapport à la profondeur des objets existants dans l'espace représenté.

2. Procédé selon la revendication 1, **caractérisé en ce que** les informations supplémentaires sont représentées dans une profondeur, qui est établie dans un contexte logique avec les objets.

3. Procédé selon la revendication 2, **caractérisé en ce que** les objets représentent un prédicteur, qui décrit le parcours estimé de l'avion, et **en ce que** la profondeur des informations supplémentaires se situe dans le champ du prédicteur.

4. Procédé selon la revendication 3, **caractérisé en ce que** le prédicteur est composé de plusieurs parties se trouvant les unes derrières les autres, et **en ce que** la profondeur des informations supplémentaires se situe dans le champ d'une première partie suivant immédiatement l'avion.

5. Procédé selon la revendication 1, **caractérisé en ce que** la profondeur des informations supplémentaires est variable et est adaptée à la profondeur des objets par défaut dans l'espace.

6. Procédé selon la revendication 5, **caractérisé en ce que**, entre plusieurs objets dans l'espace, un ou plusieurs objets peuvent être choisis en tant qu'objets par défaut.

7. Procédé selon l'une quelconque des revendications précédentes, **caractérisé en ce que** des informations supplémentaires particulièrement importantes sont mises en valeur du fait qu'elles sont représentées devant l'écran d'un dispositif de restitution d'images stéréoscopique.

8. Procédé selon l'une quelconque des revendications précédentes, **caractérisé en ce que** des informations supplémentaires particulièrement importantes sont mises en valeur du fait qu'elles sont représentées avec une profondeur se modifiant, de préférence avec une profondeur décroissante (en rapproché de l'observateur).

9. Procédé selon l'une quelconque des revendications précédentes, **caractérisé en ce que**, pour la représentation d'objets supplémentaires, qui se trouvent derrière l'observateur, les objets supplémentaires sont dotés d'un parallaxe et sont représentés en décalé pour l'oeil gauche et pour l'oeil droit de telle sorte qu'ils apparaissent comme se situant entre l'observateur et l'écran.

10. Procédé selon la revendication 9, **caractérisé en ce qu'**un volume visuel comprenant les objets supplémentaires, lequel s'étend de façon continue depuis un point visuel se trouvant derrière l'observateur jusqu'au plan de l'écran, est réduit à un volume visuel entre l'observateur et le plan de l'écran.

11. Procédé selon l'une quelconque des revendications précédentes, **caractérisé en ce que** la profondeur de l'espace par rapport à la réalité est représentée en élargi du fait qu'un déport des images est agrandi par rapport à une projection à l'échelle de l'image, pour l'oeil gauche et pour l'oeil droit, au moins dans une partie de la profondeur.
